Europäisches Patentamt

European Patent Office

Office européen des brevets

(19)

(11) Publication number: **0 134 139**
A1

(12) # EUROPEAN PATENT APPLICATION

(21) Application number: **84305452.9**

(22) Date of filing: **10.08.84**

(51) Int. Cl.⁴: **F 16 D 13/68**

(30) Priority: **18.08.83 GB 8322280**

(43) Date of publication of application: **13.03.85**
Bulletin 85/11

(84) Designated Contracting States: **BE DE FR GB IT**

(71) Applicant: **AUTOMOTIVE PRODUCTS PUBLIC LIMITED COMPANY**, Tachbrook Road, Leamington Spa Warwickshire CV31 3ER (GB)

(72) Inventor: **Chouings, John Leslie, Malpas Bubbenhall, Coventry West Midlands CV8 3BD (GB)**

(74) Representative: **Cundy, Anthony Brian, Anthony Cundy & Company 384 Station Road Dorridge, Solihull West Midlands B93 8ES (GB)**

(54) Friction clutch driven plates.

(57) A friction clutch driven plate comprises the usual driven hub member comprising splined hub (11) with integral flange (13) and driving member constituted primarily by two side plates (15) and (16) joined by rivets (17) and carrying friction facings (26) and (27). Drive between the driving and driven members is provided by circumferentially directed coil springs (23) arranged in windows (19) and (21) in the side plates and window (22) in the hub flange. In this invention, the windows in the side plates carry spring guide members (24) formed of low-friction plastics material such as acetal resin and these guide members act particularly to support the coil spring against centrifugal force when the driven plate is rotated at speed. The low friction between springs and guide members renders the overall friction between driving and driven members more predictable.

## FRICTION CLUTCH DRIVEN PLATES

The invention relates to friction clutch driven plates. A typical clutch driven plate is shown in UK Patent Specification 1 257 611 A. Two side plates are driven by friction facing carriers and transmit torque to a flanged hub through helical springs arranged in apertures in the side plates and hub flange.

It is also common to introduce a predetermined amount of friction damping between the hub and the side plates but in order to set this friction damping accurately in mass production it is important to avoid substantial spurious friction. When a friction clutch driven plate is rotating at speed, centrifugal force acts on the springs and presses them firmly into engagement with the outer edge of at least one aperture. Normally the spring engages angled spring retainers bent out from the sheet metal material of the side plates at the outer edges thereof. This engagement between springs and outer edges of apertures can give rise to substantial friction which alters the damping characteristic of the torsional vibration damper in relation to rotational speed in an unpredictable manner.

An object of the invention is to provide a torsional vibration damper in which this problem is diminished.

According to the present invention there is provided a friction clutch driven plate comprising a driving member and a driven member arranged to be capable of limited relative angular rotation, at least one circumferentially directed helical coil spring arranged in an aperture of the driving member and an aperture of the driven member to establish a driving connection through the spring between the members, wherein one of the apertures is arranged in a metal member and incorporates a guide member of synthetic plastics material arranged to support the spring against centrifugal force during rotation of the driven plate and provide a low friction bearing surface for the spring as the spring slides in the aperture in response to relative rotation between the members.

Preferably the driving member has two side plates, with mutually aligned apertures and each of these apertures of the driving member has a respective guide member of synthetic plastics material.

The guide members may be clipped into position by projections arranged to interlock with edges of the apertures. The guide members may be constituted by acetal resin.

An embodiment of the invention will now be described with reference to the accompanying drawings in which:-

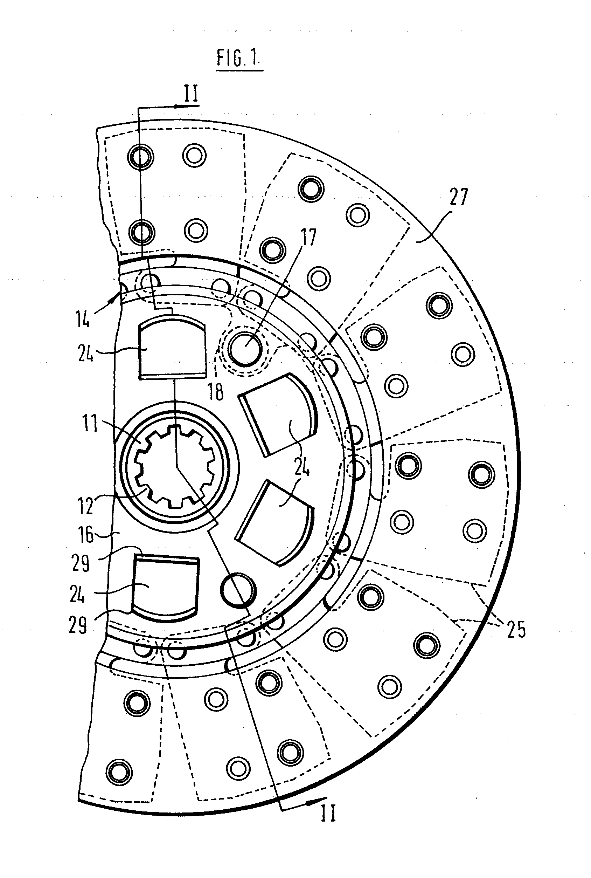

Figure 1 is an end elevation of a friction clutch driven plate in accordance with the invention;

Figure 2 is a section on line II-II of figure 1;

and

Figure 3 is an enlarged view of part of figure 2 showing a damping spring and guide members for the spring in greater detail.

The friction clutch driven plate shown in the drawings incorporates a hub 11 having internal splines 12 for establishment of a driving connection to a gearbox input shaft (not shown). Hub 11 has an integral outwardly extending radial flange 13.

A friction facing carrier 14 is constituted primarily by two side plates 15 and 16 joined together by rivets 17. Side plates 15 and 16 are positioned one to each side of the flange 13 and are guided by the hub 11 for angular movement with respect to the hub about the hub axis. Rivets 17 pass through recesses 18 in the outer edge of the hub flange 13 with a clearance in such a way that the rivets 17 act as stop pins to restrict the angular movement between the hub and the carrier 14.

The side plates 15 and 16 and also the hub 13 are provided with aligned apertures known as windows as shown at 19, 21 and 22. A steel helical coil spring 23 is arranged in each set of aligned windows with its axis running in a circumferential direction with respect to the hub axis. Windows 19 and 21 have spring guide members 24 which will be described in detail subsequently.

Side plate 15 carries a series of spring segments 25 which in turn carry two annular friction facings 26 and 27. As thus far described, the driven plate is conventional apart from guide members 24 and corresponds with that described in UK patent specification 1 257 611 A. In use, torque applied to the friction facings is transmitted to the hub through the springs 23 which allow resilient angular deflection between the hub and the friction facing carrier and thus tend to damp torsional vibrations in the drive through the clutch driven plate. It is of course the springs 23 acting in the windows 19, 21 and 22 of side plates 15 and 16 and hub flange 13 which act as a torsional vibration damper. During axial compression of the springs 23 associated with angular deflection between the hub and the friction facing carrier, and ignoring the guide members 24, there is a tendency for springs 23 to rub against the edges of the windows as these springs are compressed. Particularly when the clutch driven plate is rotating at speed, for example 4000 rpm, centrifugal force acting on the springs forces them in an outward direction into firm engagement with the outer edges of the windows. The result is significant frictional resistance to relative rotation between the hub and carrier due to friction between the springs and their retainers. This friction can interfere with correct operation of the torsional vibration damper so it is desirable to reduce or eliminate this friction.

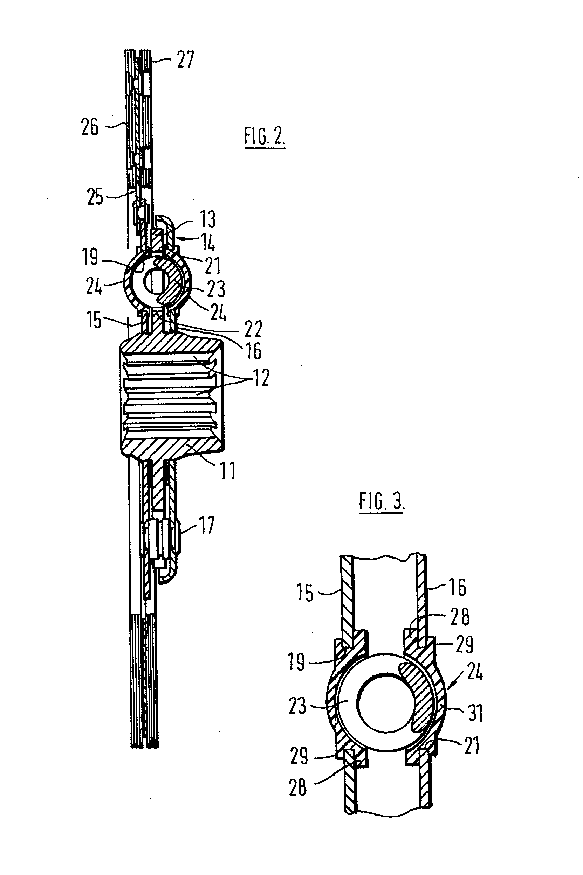

In accordance with the present invention the guide members 24 are provided to guide springs 23 and to reduce friction compared with allowing the springs to rub against the edges of the windows. As best seen in figure 3, each guide member 24 is a moulding of plastics material. It has a rim 28 which is primarily on the inner side of side plate 15 but is clipped into position in the window by means of projections 29 which interlock with the edge of the window. Guide member 24 also incorporates a bulging portion 31 which acts as a guide surface for the spring 23. As this spring is subject to centrifugal force during rotation of the clutch driven plate, it is primarily the outer part of the guide member which provides the effective guide surface.

The material chosen for the guide member 24 should have a low co-efficient of friction and should be sufficiently rigid to maintain its shape under load and particularly at the elevated temperature expected in the environment of a friction clutch.   Acetal resin is a
suitable material.

In use, when the driven plate is rotating
at speed and subject to torsional vibrations, relative
movement controlled by springs 23 between the hub flange
13 and the side plates 15 and 16 in conjunction with
centrifugal force results in rubbing engagement between
the springs 23 and guide members 24.   The guide members
24 ensure that this movement is accompanied by very
little friction and very little wear.   The result is
a driven plate which has a long life and the desired
damping characteristics even at high operating speeds.

CLAIMS

1.      A friction clutch driven plate comprising a driving member (14) and a driven member (11-13) arranged to be capable of limited relative angular rotation, at least one circumferentially directed helical coil spring (23) arranged in an aperture (19,21) of the driving member and an aperture (22) of the driven member to establish a driving connection through the spring between the members, wherein one of the apertures (12,21) is arranged in a metal member (15,16) characterised in that this aperture incorporates a guide member (24) of synthetic plastics material arranged to support the spring (23) against centrifugal force during rotation of the driven plate and provide a low friction bearing surface for the spring as the spring slides in the aperture in response to relative rotation between the members.

2.      A friction clutch driven plate according to claim 1 characterised in that the driving member has two side plates (15,16) with mutually aligned apertures (19,21) and each aperture of the driving member has a respective guide member (24) of synthetic plastics material.

3.      A friction clutch driven plate according to claim 2 characterised in that the guide members (24) are clipped into position by projections (29) arranged to interlock with the edge of the respective aperture (19 or 21)

4.      A friction clutch driven plate according to any one of the preceding claims characterised in that the guide members are formed of acetal resin.

FIG.1.

FIG. 2.

FIG. 3.

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-B-1 084 577  (HÄUSSERMANN) <br> * whole document * | 1,2 | F 16 D   13/68 |
| | --- | | |
| A | US-A-2 251 128  (GOODWIN) | | |
| | --- | | |
| A | FR-A-  954 653  (DANA) | | |
| | --- | | |
| A | FR-A-  862 606  (SAURER) | | |
| | ----- | | |

TECHNICAL FIELDS SEARCHED (Int. Cl.4)

F 16 D

The present search report has been drawn up for all claims

| Place of search <br> THE HAGUE | Date of completion of the search <br> 29-10-1984 | Examiner <br> ORTHLIEB CH.E. |
|---|---|---|

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503. 03.82